# EUROPÄISCHE PATENTSCHRIFT

(11) **EP 2 539 620 B1**
(45) Veröffentlichungstag und Bekanntmachung des Hinweises auf die Patenterteilung: **04.06.2014**
(21) Anmeldenummer: 11705543.4
(22) Anmeldetag: 23.02.2011
(51) Int. Cl.: F16L 41/03, F15D 1/14

(54) **FLÜSSIGKEITSVERTEILER**
LIQUID DISTRIBUTOR
RÉPARTITEUR DE LIQUIDE

(30) Priorität: 25.02.2010 CH 2342010
(43) Veröffentlichungstag der Anmeldung: 02.01.2013
(73) Patentinhaber: Glatt Maschinen- und Apparatebau AG, 4133 Pratteln (CH)
(72) Erfinder: UEBERSCHLAG, Pascal, F-68480 Fislis (FR); DREHER, Armin, 79689 Maulburg (DE); MAURER, Frank, 79594 Inzlingen (DE)
(74) Vertreter: Braun, André jr.
(86) Internationale Anmeldenummer: PCT/EP2011/052692
(87) Internationale Veröffentlichungsnummer: WO 2011/104281

(56) Entgegenhaltungen:
- EP-A1- 0 588 116
- DE-A1- 2 350 277
- DE-A1- 2 510 830
- DE-A1- 3 102 167
- DE-U- 7 221 109
- US-A- 4 284 243
- US-A- 4 510 976

## Beschreibung

Die Erfindung betrifft eine Vorrichtung zur Verteilung von Flüssigkeiten mit einer Verteilkammer, einem an einer Seite der Verteilkammer angeordneten Flüssigkeitseingang und mehreren an der gegenüber liegenden Seite angeordneten Flüssigkeitsausgängen. Eine Vorrichtung mit den Merkmalen des Oberbegriffs von Anspruch 1 ist bekannt aus der

EP 0 588 116 A1. Das Verteilen eines Flüssigkeitsstroms auf mehrere abgehende Teilströme findet in vielen verschiedenen Anwendungen statt. Vorrichtungen für dieses Verteilen sind häufig so aufgebaut, dass eine den zu verteilenden Flüssigkeitsstrom führende Leitung in einer Kammer mündet, von der die Leitungen abgehen, welche die Teilströme führen. Eine spezielle geometrische Form müssen solche Kammern in der Regel nicht aufweisen. Am häufigsten ist daher eine flachzylindrische Form, bei welcher der Flüssigkeitseingang an einer Flachseite der Kammer und die Flüssigkeitsausgänge an der gegenüber liegenden Seite verteilt angeordnet sind.

Es hat sich herausgestellt, dass beim Einsatz solcher Verteilvorrichtungen für das Verteilen von Suspensionen Probleme auftreten können. Die Strömungsverhältnisse in der Kammer sind so, dass entlang der direkten Verbindungslinien vom Flüssigkeitseingang zu den Ausgängen die stärkste Strömung stattfindet, während zwischen diesen starken Strömungen Bereiche mit nur geringer Flüssigkeitsbewegung liegen. In diesen Toträumen findet eine Entmischung der Suspension und eine Ablagerung der Feststoffe statt. Dies führt häufig zu Betriebsstörungen, vor allem dann, wenn sich Teile des abgelagerten Materials in Form grösserer Sedimentstücke lösen und in die Ausgangsleitungen gelangen.

Der Erfindung liegt daher die Aufgabe zugrunde, eine Verteilvorrichtung zu finden, die vor allem für Suspensionen geeignet ist und mit der die genannten Probleme vermieden werden.

Erfindungsgemäss wird dies dadurch gelöst, dass zwischen den Flüssigkeitsausgängen sich radial nach innen verengende Vorsprünge in die Kammer hineinragen, welche die Verteilkammer im wesentlichen sternförmig begrenzen.

Gemäss einer bevorzugten Ausführungsform sind diese Vorsprünge im Wesentlichen dreieckig und mit einer Spitze auf die Mitte der Kammer gerichtet. Gemäss einer weiteren bevorzugten Ausführungsform wird dies erreicht durch einen in eine flachzylindrische Kammer eingesetzten Einsatz mit einer zylindrischen Aussenwand und einer sternförmigen Aussparung.

Im Folgenden werden anhand der beiliegenden Zeichnungen bevorzugte Ausführungsbeispiele der Erfindung beschrieben.

Es zeigen
- Fig. 1: eine Explosionsdarstellung eines Verteilers für Suspensionen
- Fig. 2: einen Schnitt durch den zusammengesetzten Verteiler
- Fig. 3: eine Explosionsdarstellung einer weiteren Ausführungsform eines Verteilers

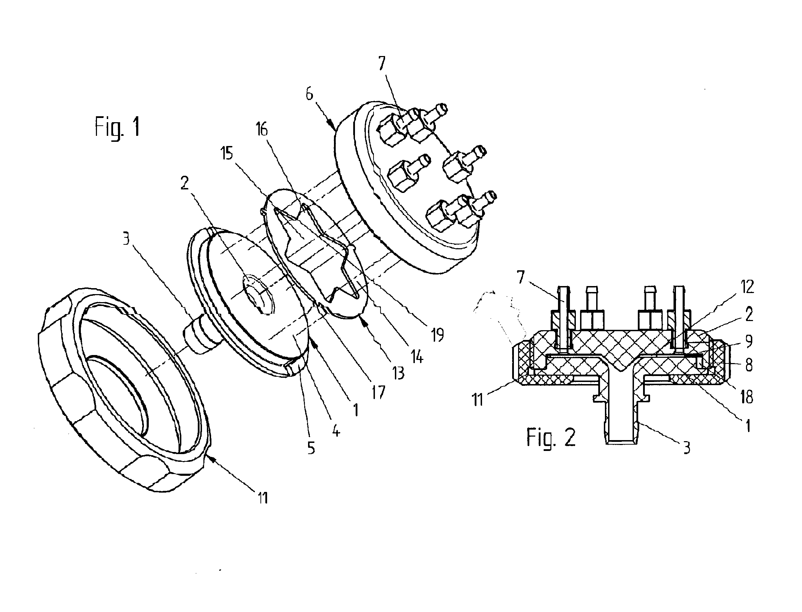

Der in Fig. 1 gezeigte Verteiler besteht aus einer eingangsseitigen zylindrischen Platte 1, in deren Zentrum ein Flüssigkeitseingang 2 in Form eines Schlauchanschlusses 3 angeordnet ist, und einer ausgangsseitigen Platte 6 mit in gleichmässigen Winkelabständen verteilt angeordneten Flüssigkeitsausgängen in Form von Schlauchanschlüssen 7. Das vorliegende Ausführungsbeispiel besitzt sechs Ausgänge. Es sind ohne weiteres aber auch weniger, d.h. drei bis fünf, oder auch mehr als sechs Ausgänge möglich.

Wie aus Fig. 2 ersichtlich besitzt die ausgangsseitige Platte 6 einen umlaufenden vorspringenden Rand 8, der eine zylindrische Vertiefung 9 definiert. Die eingangsseitige Platte 1 besitzt einen der ausgangsseitigen Platte zugewandten inneren Teil 4 und einen flanschförmigen äusseren Teil 5. Der Durchmesser des inneren Teils 4 entspricht dem Innendurchmesser der Vertiefung 9, so dass im zusammengesetzten Zustand der innere Teil 4 sich in der Vertiefung 9 befindet und der flanschförmige Teil am Rand 8 anliegt.

Im zusammengesetzten Zustand werden die beiden Platten durch eine Überwurfmutter 11, die in ein an der Aussenseite der ausgangsseitigen Platte befindliches Gewinde eingreift, zusammengehalten. Die beiden Platten sind so dimensioniert, dass im zusammengesetzten Zustand zwischen ihnen ein flachzylindrischer Zwischenraum 12 besteht, der eine Verteilkammer bildet, wie in Fig. 2 auf der linken Seite gezeigt, wo zur Verdeutlichung die Kammer leer dargestellt ist.

In den Zwischenraum 12 ist ein Einsatz 13 eingelegt, der eine zylindrische Aussenwand 14 und eine sternförmige Aussparung 15 besitzt. Der Einsatz besteht vorzugsweise aus einem elastischen Material, beispielsweise aus PTFE, Silicon etc., und sorgt zugleich für die Dichtungsfunktion zwischen den Platten. Die Anzahl der nach aussen gerichteten Spitzen 16 der Aussparung entspricht der Zahl der Ausgänge. Der Einsatz besitzt Positionierungsnocken 17, die in entsprechende Nuten 18 in der Wand der Vertiefung eingreifen derart, dass die Spitzen der Aussparung jeweils bei einem Ausgang zu liegen kommen. Auf diese Weise ist durch die dreieckigen Vorsprünge 19 zwischen den Spitzen der Raum zwischen den Ausgängen ausgefüllt, d.h. es besteht kein Totraum mehr, in welchem Ablagerungen von Feststoffen stattfinden können.

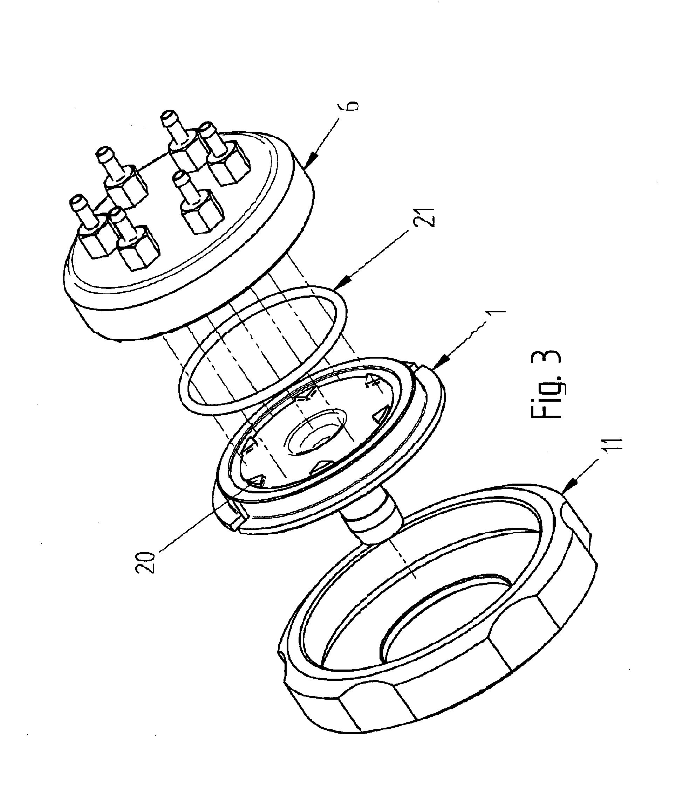

Die in Fig. 3 gezeigte Ausführungsform ist in gleicher weise wie der in Fig. 1 und 2 gezeigte Verteiler aufgebaut, mit eingangseitiger Platte 1, ausgangsseitiger Platte 6 und Überwurfmutter 11, allerdings mit dem Unterschied, dass kein Einsatz vorgesehen ist, sondern dreieckige Vorsprünge 20 einstückig an der Stirnseite der eingangsseitigen Platte 1 ausgebildet sind. Für die Dichtung zwischen den Platten ist ein O-Ring 21 vorgesehen.

Die in den Fig. 1 und 2 gezeigte Ausführungsform eignet sich speziell für die Nachrüstung von bestehenden Verteilern. Ausserdem ist diese Ausführungsform besonders flexibel, indem bei ihr durch Austausch des Einsatzes ein Wechsel der Zahl von Ausgängen möglich ist.

## Patentansprüche

1. Vorrichtung zur Verteilung von Flüssigkeiten mit einer zwischen zwei kreisförmigen Platten (1,6) angeordneten flachzylindrischen Verteilkammer (12), einem an einer der die Verteilkammer (12) begrenzenden Platten (1) angeordneten Flüssigkeitseingang (3) und mehreren an der gegenüber liegenden Platte (6) angeordneten Flüssigkeitsausgängen (7), **dadurch gekennzeichnet, dass** zwischen den Flüssigkeitsausgängen (7) sich radial nach innen verengende Vorsprünge (19, 20) in die Verteilkammer (12) hineinragen, welche die Verteilkammer (12) im wesentlichen sternförmig begrenzen.

2. Verteilvorrichtung nach Anspruch 1, **dadurch gekennzeichnet, dass** die Vorsprünge (19, 20) im Wesentlichen dreieckig sind und mit einer Spitze auf die Mitte der Verteilkammer (12) gerichtet sind.

3. Verteilvorrichtung nach Anspruch 1, **gekennzeichnet durch** einen in die Verteilkammer (12) eingesetzten Einsatz (13) mit einer zylindrischen Aussenwand (14) und einer sternförmigen Aussparung (15).

## Claims

1. A device for distributing liquids having a flat cylindrical distribution chamber (12) arranged between two circular plates (1, 6), a liquid inlet (3) arranged on one of the plates (1) bordering the distribution chamber (12), and a plurality of liquid outlets (7) arranged on the opposite plate (6), **characterized in that** projections (19, 20), which taper radially inwards and substantially border the distribution chamber (12) in the form of a star, extend into the distribution chamber (12) between the liquid outlets (7).

2. The distribution device as claimed in claim 1, **characterized in that** the projections (19, 20) are substantially triangular and are directed with one corner towards the middle of the distribution chamber (12).

3. The distribution device as claimed in claim 1, **characterized by** an insert (13) which has a cylindrical outer wall (14) and a star-shaped cutout (15) and is inserted into the distribution chamber (12).

## Revendications

1. Dispositif pour la distribution de liquides, comportant une chambre de distribution (12) en forme de cylindre aplati, disposée entre deux plaques circulaires (1, 6), une entrée de liquide (3) placée sur l'une (1) des plaques qui délimitent la chambre de distribution (12) et plusieurs sorties de liquide (7) placées sur la plaque (6) située à l'opposé, **caractérisé en ce qu'**entre les sorties de liquide (7), des protubérances (19, 20) qui se rétrécissent radialement vers l'intérieur font saillie dans la chambre de distribution (12) et limitent la chambre de distribution (12) sensiblement en forme d'étoile.

2. Dispositif de distribution selon la revendication 1, **caractérisé en ce que** les protubérances (19, 20) sont sensiblement triangulaires et sont dirigées par un sommet vers le milieu de la chambre de distribution (12).

3. Dispositif de distribution selon la revendication 1, **caractérisé par** une insertion (13) insérée dans la chambre de distribution (12) et présentant une paroi extérieure cylindrique (14) et un évidement (15) en forme d'étoile.
